# FASCICULE DE BREVET EUROPEEN

(11) **EP 0 509 379 B1**
(45) Date de publication et mention de la délivrance du brevet: **15.11.1995**
(21) Numéro de dépôt: 92106038.0
(22) Date de dépôt: 08.04.1992
(51) Int. Cl.: H02K 37/12, H02K 21/24

(54) **Micromoteur électromagnétique à flux axial**
Elektromagnetischer Mikromotor mit Axialfluss
Electromagnetic micromotor with axial flux

(30) Priorité: 11.04.1991 FR 9104559
(43) Date de publication de la demande: 21.10.1992
(73) Titulaire: Eta SA Fabriques d'Ebauches, 2540 Granges (CH)
(72) Inventeur: Daho, Taghezout, CH-1006 Lausanne (CH)
(74) Mandataire: de Raemy, Jacques

(56) Documents cités:
- EP-A- 0 307 773
- US-A- 4 839 551
- PATENT ABSTRACTS OF JAPAN vol. 11, no. 204 (E-520)(2651), 2 juillet 1987; & JP-A-62025859
- PATENT ABSTRACTS OF JAPAN vol. 12, no. 498 (E-698)(3345), 26 décembre 1988; & JP - A - 63209455
- PATENT ABSTRACTS OF JAPAN, vol. 005 no. 133 (E-071), 25 août 1981; & JP-A-56069850
- PATENT ABSTRACTS OF JAPAN, vol. 011, no. 026(P-539), 24 janvier 1987; & JP-A-61196391
- PATENT ABSTRACTS OF JAPAN, vol. 014 no. 411 (E-0973), 5 september 1990; & JP-A-02155248
- PATENT ABSTACTS OF JAPAN, vol. 012, no. 369 (E-665), 4 octobre 1988 & JP-A-63122131

## Description

La présente invention concerne un micromoteur électromagnétique à flux axial, et plus particulièrement un micromoteur pas à pas miniaturisé.

On connaît déjà, d'après notamment le brevet CH 668 160 un micromoteur du type susmentionné, et qui comporte un stator par rapport auquel un rotor aimanté est monté pivotant autour d'un axe de rotation. Ce rotor comporte au moins une paire de pôles magnétiques produisant dans un entrefer un champ magnétique qui est parallèle audit axe de rotation du rotor. De plus, ce micromoteur comprend au moins une bobine plane placée dans ledit entrefer, perpendiculairement à l'axe de rotation, de manière à intercepter le flux créé par le champ. Selon ce document, la bobine est ménagée dans une face d'une plaquette en semiconducteur et elle est fabriquée selon les techniques classiques de fabrication des circuits intégrés. Dans ce type de moteur, l'entrefer est défini par deux flasques parallèles à haute perméabilité magnétique, l'un étant solidaire du rotor tandis que l'autre est monté fixe sur le stator. En fonctionnement, les flux magnétiques engendrés respectivement par le rotor aimanté et par la ou les bobines, circulent entre les deux flasques qui sont mobiles l'un par rapport à l'autre. Il résulte de cette structure la création de forces de frottement associées à l'attraction magnétique, qui diminuent le rendement du micromoteur.

Une solution qui permet d'éliminer cet inconvénient est suggérée notamment par le brevet US 4 839 551 et la demande de brevet japonais 62-25859

Ces deux documents décrivent non pas des micromoteurs mais des moteurs par exemple pour des lecteurs de CD ou de bandes magnétiques, qui sont du même type que le micromoteur du brevet CH 668 160 et qui possèdent deux armatures qui correspondent aux flasques du brevet suisse mais dans lesquels ces armatures sont toutes les deux liées mécaniquement à un aimant et tournent en même temps que lui.

Dans le brevet américain les armatures, dont l'une porte l'aimant, sont montées sur un arbre pivotant par l'intermédiaire de deux pièces annulaires respectives qui ont une largeur, c'est-à-dire une distance entre leurs bords interne et externe, relativement grande et des parties minces sur lesquelles les armatures sont fixées en porte-à-faux.

Dans la demande de brevet japonais 62-25859, les deux armatures, dont l'une porte également l'aimant, sont montées sur un support commun en forme de cloche qui est fixé par son sommet sur un arbre tournant.

Le but de l'invention est de fournir un micromoteur électromagnétique dont la structure s'adapte particulièrement bien aux techniques de fabrication des micromoteurs miniaturisés et qui ne présente ni le défaut du micromoteur du brevet CH 668 160 ni celui des moteurs des deux autres documents dont on vient de parler.

Ce but est atteint grâce au fait que dans le micromoteur selon l'invention, qui comporte :
- un stator,
- un rotor aimanté, monté pivotant par rapport au stator, autour d'un axe de rotation, et comportant lui-même au moins une paire de pôles magnétiques qui produisent dans un entrefer un champ magnétique parallèle audit axe de rotation,
- un premier et un second flasques à haute perméabilité magnétique, perpendiculaires audit axe de rotation et mécaniquement solidaires du rotor, qui définissent ledit entrefer, et
- au moins une bobine plane, placée dans ledit entrefer, perpendiculairement audit axe de rotation, de manière à intercepter un flux créé par ledit champ, les premier et second flasques sont rendus solidaires du rotor par l'intermédiaire, respectivement, d'une première et d'une seconde douilles qui sont disposées coaxialement l'une autour de l'autre, solidaires l'une de l'autre et montées libres en rotation autour d'un tenon fixe, lié rigidement au stator.

D'autres avantages du moteur selon l'invention apparaîtront à la lecture de la description qui suit de deux modes de réalisation non limitatifs, en liaison avec les dessins annexés dans lesquels :
- la figure 1 représente une vue en coupe longitudinale d'un micromoteur électromagnétique selon un premier mode de réalisation de l'invention, et
- la figure 2 est une vue similaire à la figure 1, mais représentant un deuxième mode de réalisation de l'invention.

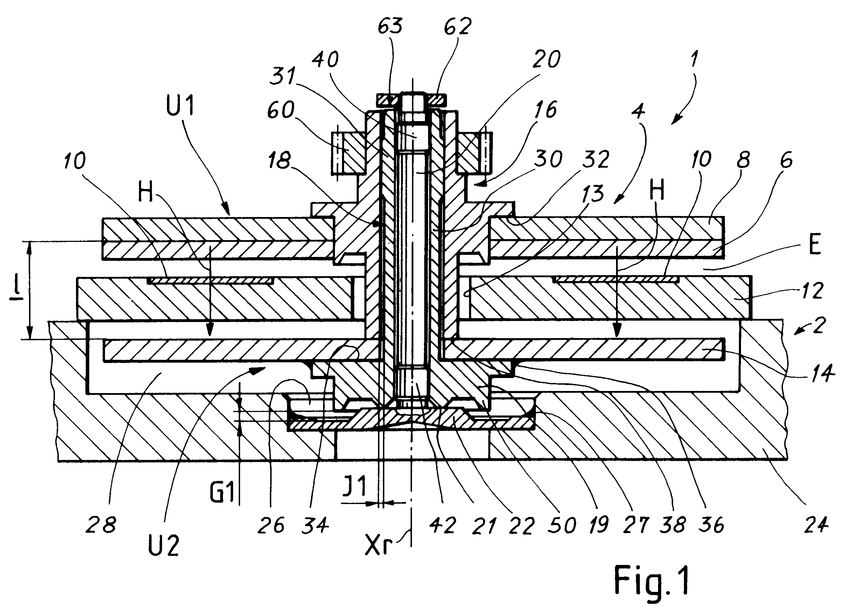

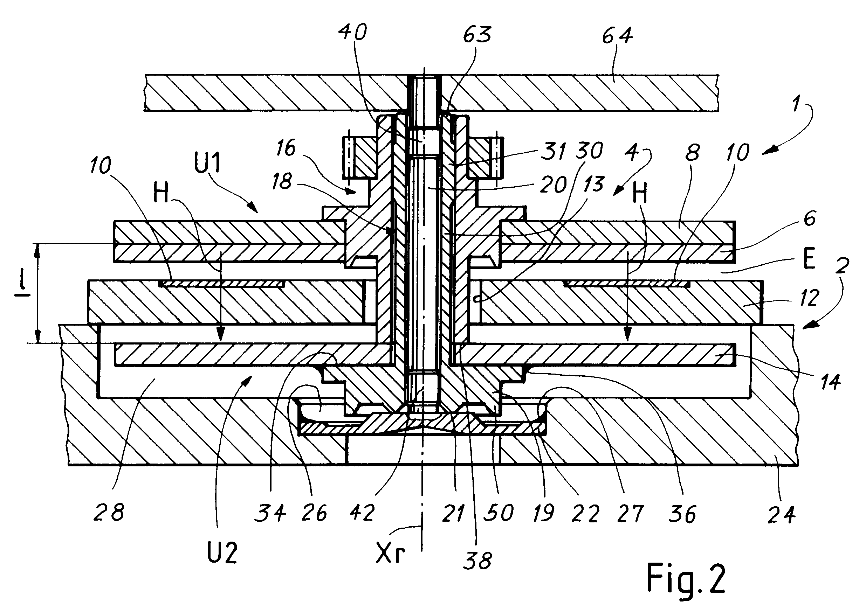

En se référant aux figures 1 et 2, on voit un micromoteur électromagnétique à flux axial désigné généralement par la référence 1.

Ce micromoteur 1 comporte un stator 2 et un rotor aimanté 4 qui est monté pivotant autour d'un axe géométrique de rotation Xr, par rapport au stator 2. Le rotor 4 comporte au moins une paire de pôles magnétiques (non représentés sur la figure) produisant dans un entrefer E un champ magnétique H parallèle audit axe de rotation Xr du rotor 4. A cet effet, le rotor 4 est composé d'un disque circulaire 6 aimanté et d'un premier flasque 8 à haute perméabilité magnétique. Pour la construction du disque 6 et du flasque 8, on se référera à la description du document suisse susmentionné. Le moteur comporte en outre des bobines 10 planes. Ces bobines sont placées dans ledit entrefer E perpendiculairement à l'axe de rotation Xr, de manière à intercepter un flux créé par le champ H. Les bobines 10 sont ménagées sur un substrat 12 réalisé en un matériau électriquement isolant, tel qu'un matériau semiconducteur formé par du silicium et comportant en son centre, coaxialement à l'axe Xr, un alésage débouchant 13. Là encore, ces bobines ont une structure identique à celles décrites dans le document qui a été mentionné ci-avant.

Le micromoteur comporte un second flasque 14 à haute perméabilité magnétique, de préférence réalisé, comme le premier flasque 8, en un matériau magnétique doux. Ce second flasque 14 se trouve en regard de la face libre du disque 6 et est solidaire mécaniquement du rotor 4. Ainsi, l'entrefer E est défini par les deux flasques 8 et 14 qui sont tous les deux solidaires du rotor 4 et qui sont susceptibles de se déplacer de façon concomitante par rapport au stator 2, lors du fonctionnement du micromoteur, c'est-à-dire lors du passage d'un courant dans les bobines d'excitation 10. On comprend donc que l'entrefer E est délimité uniquement par le rotor 4 puisqu'il est défini par les deux flasques mobiles 8 et 14 qui font partie intégrante du rotor 4.

Selon l'invention, les deux flasques 8 et 14 sont rendus solidaires du rotor 4 par l'intermédiaire respectivement d'une première douille 16 et d'une seconde douille 18 montées libres en rotation sur un tenon 20. La seconde douille 18 qui est directement montée sur le tenon 20 comporte à sa partie inférieure, en considérant le micromoteur selon l'invention dans sa position telle que représentée à la figure 1, une base 19 qui repose par un contact axial, c'est-à-dire parallèle à l'axe Xr, sur un socle 22 solidaire du tenon 20. A cet effet, la base 19 comporte en regard du socle 22 un premier collet circulaire 21, dit collet intérieur. Ce collet intérieur 21 présente une surface de frottement reposant directement sur le socle 22. Le tenon 20 s'étend perpendiculairement au socle 22 et vient de matière avec celui-ci. Le socle 22 est logé dans un support 24. Le support 24 est réalisé de préférence en un matériau amagnétique tel que du laiton et il comporte deux évidements étagés 26 et 28 dont les dimensions et formes sont prévues pour recevoir respectivement au moins le socle 22 et le second flasque 14. Ces évidements 26 et 28 dans lesquels sont logés le socle 22, ainsi qu'au moins pour chacun une partie de la base 19 et le second flasque 14, sont recouverts par le substrat 12 qui repose par son bord extérieur sur une face supérieure du support 24, au voisinage d'une paroi cylindrique qui délimite l'évidement 28.

On remarquera que le tenon 20 est fixe par rapport au support 24 puisque le socle 22 est maintenu fixement dans le fond de l'évidement 26 par un cordon de soudure 27.

Les deux douilles 16 et 18 sont emmanchées coaxialement et sont de préférence chassées l'une sur l'autre. Plus particulièrement, la douille 16 qui est la plus extérieure par rapport à l'axe géométrique Xr est chassée directement sur la douille intérieure 18. La douille 18 comporte un corps 30 qui s'élève à partir de la base 19. A la partie distale du corps 30, par rapport à la base 19, est ménagée une portée 31 dont le diamètre extérieur est légèrement supérieur à celui du corps 30, ce qui permet sur une longueur d'engagement relativement faible un montage à force de la première douille 16 sur la seconde 18.

Le tenon 20 ainsi que les douilles 16 et 18 traversent de part en part le substrat semiconducteur 12, par l'intermédiaire de l'alésage débouchant 13.

Les douilles 16 et 18 comportent respectivement des épaulements 32 et 34 sur lesquels reposent respectivement les flasques 8 et 14. Dans le mode de réalisation représenté, on a avantageusement chassé le disque circulaire aimanté 6 sur la première douille 16 de sorte que le premier flasque 8 soit pris en sandwich entre l'épaulement 32 et le disque circulaire aimanté 6. La douille 16, le premier flasque 8 et le disque circulaire aimanté 6 forment une unité U1 qui peut être préassemblée, puis montée sur le corps 30 de la seconde douille 18, déjà positionnée sur le tenon 20.

On précisera qu'avant d'être montée sur le tenon 20, la seconde douille 18 peut être préassemblée avec le second flasque 14 qui est maintenu sur celle-ci au moins en position lors du préassemblage par un joint de colle 36. La seconde douille 18 et le second flasque 14 forment aussi une unité U2.

En ce qui concerne le second flasque 14, il est monté avec un jeu radial J1 sur le corps 30 de la seconde douille 18 et il repose directement sur l'épaulement 34. De plus, le second flasque 14 est maintenu sur la seconde douille 18 par l'une des extrémités libres, référencée 38, de la première douille 16. On comprend ainsi que le second flasque 14 est maintenu en sandwich entre l'extrémité libre 38 de la première douille 16 et l'épaulement 34 de la seconde douille 18. On notera que l'épaulement 34 est directement ménagé sur la base 19. En venant en butée contre le second flasque 14, l'extrémité libre 38 de la première douille 16 délimite une largeur l de l'entrefer E.

Le tenon 20 comporte deux portées 40 et 42 respectivement distale et proximale par rapport au socle 22 et sur lesquelles est directement montée libre en rotation, la seconde douille 18. Plus précisément, la portée proximale 42 est ménagée au voisinage du socle 22 et la portée distale 40 est ménagée au voisinage de l'extrémité libre du tenon 20.

On remarquera que le tenon 20 s'étend sur toute la longueur de la seconde douille 18, voire même au-delà, et qu'il traverse ainsi tout le rotor 4. Une telle construction permet notamment d'assurer un montage et un guidage précis du rotor 4.

Par ailleurs, la base 19 comporte en regard du socle 22 un second collet circulaire 50 qui est susceptible de venir en contact avec le socle 22 en cas de fléchissement du tenon 20. Ce second collet 50 est coaxial au premier 21, et il est ménagé autour de ce dernier. Par rapport à l'axe de rotation Xᵣ, les deux collets coaxiaux 21 et 50 sont disposés respectivement intérieurement et extérieurement. La garde G1 entre ce collet périphérique 50 et le socle 22 est calculée de telle sorte que le fléchissement du tenon 20 reste dans la limite de résistance élastique à la flexion et que ni le flasque 14, ni le disque aimanté 6 ne puissent venir frotter sur le substrat 12.

Pour transmettre le couple fourni par le micromoteur 1 selon l'invention, un pignon 60 est chassé sur la première douille 16, au voisinage de son extrémité libre qui fait extérieurement saillie du micromoteur 1. On précisera que ce pignon 60 pourrait être directement ménagé par usinage dans la masse, sur la première douille 16.

Conformément au mode de réalisation représenté à la figure 1, le déplacement axial de l'équipage mobile formé par les deux douilles 16 et 18 pourvues des flasques 8 et 14 et de l'aimant permanent 6, est limité par une butée formée par une bague filetée 62 vissée sur l'extrémité libre du tenon 20. La bague 62 peut être chassée sur le tenon 20 ou elle peut être bloquée par des moyens classiques, non représentés, tels qu'un contre-écrou ou un sertissage. On observera que le corps 30 de la douille intérieure 18 fait légèrement saillie de la douille extérieure 16, au voisinage de l'extrémité libre du tenon 20. Ainsi, la douille intérieure 18 comporte une extrémité libre en saillie qui forme une partie d'appui 63 apte à venir en contact axial sur la bague filetée 62.

Dans le mode de réalisation de la figure 2, l'extrémité libre du tenon 20 est engagée dans une plaque 64, telle qu'un pont de rouage.

On remarquera que le tenon 20 est fixe par rapport à la plaque 64, ces deux éléments ne présentant aucun mouvement relatif.

La butée axiale est ici fournie par la plaque 64 elle-même, sur une face de laquelle peut venir reposer la partie d'appui 63 de la seconde douille 18.

## Revendications

1. Micromoteur électromagnétique à flux axial, du type comportant
- un stator (2),
- un rotor aimanté (4) monté pivotant par rapport au stator (2) autour d'un axe de rotation (Xr), ce rotor (4) comportant au moins une paire de pôles magnétiques produisant dans un entrefer (E) un champ magnétique (H) parallèle audit axe de rotation (Xr),
- un premier et un second flasques (8,14) à haute perméabilité magnétique, perpendiculaires audit axe de rotation (Xr) et mécaniquement solidaires du rotor (4), qui définissent ledit entrefer (E), et
- au moins une bobine plane (10), placée dans ledit entrefer (E), perpendiculairement audit axe de rotation (Xr), de manière à intercepter un flux créé par ledit champ (E),
caractérisé en ce que les premier et second flasques sont rendus solidaires du rotor (4) par l'intermédiaire, respectivement, d'une première et d'une seconde douilles (16,18) qui sont disposées coaxialement l'une autour de l'autre, solidaires l'une de l'autre et montées libres en rotation autour d'un tenon (20) fixe, lié rigidement au stator (2).

2. Micromoteur selon la revendication 1, caractérisé en ce que les douilles (16,18) sont emmanchées l'une dans l'autre.

3. Micromoteur selon la revendication 1 ou 2, caractérisé en ce que les deux douilles (16,18) sont chassées l'une sur l'autre.

4. Micromoteur selon l'une quelconque des revendications précédentes, caractérisé en ce que les douilles (16,18) comportent respectivement des épaulements (32,34) sur lesquels reposent respectivement les flasques (8,14).

5. Micromoteur selon l'une quelconque des revendications précédentes, caractérisé en ce que le second flasque (14) est maintenu sur la seconde douille (18) par une extrémité libre de la première douille (16).

6. Micromoteur selon l'une quelconque des revendications précédentes, caractérisé en ce que l'extrémité libre de la première douille (16) vient en butée sur le second flasque (14) et délimite la largeur dudit entrefer (E).

7. Micromoteur selon l'une quelconque des revendications précédentes, caractérisé en ce que ledit tenon (20) comporte deux portées respectivement distale (40) et proximale (42) sur lesquelles est montée libre en rotation la seconde douille (18).

8. Micromoteur selon l'une quelconque des revendications précédentes, caractérisé en ce que le tenon (20) s'étend sur toute la longueur de la seconde douille (18).

## Patentansprüche

1. Elektromagnetischer Axialfluß-Mikromotor der Bauart, welche umfaßt:
- einen Stator (2),
- einen magnetisierten Rotor (4), der drehbeweglich relativ zum Stator (2) um eine Drehachse (Xr) montiert ist, welcher Rotor (4) mindestens ein magnetisches Polpaar aufweist, das in einem Luftspalt (E) ein Magnetfeld (H) parallel zur Drehachse (Xr) erzeugt,
- einen ersten und einen zweiten Flansch (8, 14) mit hoher magnetischer Permeabilität, senkrecht zur Drehachse (Xr) und mechanisch mit dem Rotor (4) verbunden, welche den Luftspalt (E) begrenzen, und
- mindestens eine ebene Spule (10), die in dem Luftspalt (E) senkrecht zur Drehachse (Xr) derart angeordnet ist, daß sie von dem Fluß, erzeugt von dem Feld (E), durchsetzt wird,
dadurch gekennzeichnet, daß der erste und der zweite Flansch mit dem Rotor (4) über eine erste bzw. zweite Hülse (16, 18) verbunden sind, die koaxial umeinander angeordnet sind, miteinander verbunden sind und frei drehbar um einen festen Zapfen (20) montiert sind, der starr mit dem Stator (2) verbunden ist.

2. Mikromotor nach Anspruch 1, dadurch gekennzeichnet, daß die Hülsen (16, 18) ineinander gefügt sind.

3. Mikromotor nach Ansprüchen 1 oder 2, dadurch gekennzeichnet, daß die beiden Hülsen (16, 18) ineinander getrieben sind.

4. Mikromotor nach einem der vorangehenden Ansprüche, dadurch gekennzeichnet, daß die Hülsen (16, 18) jeweils Schultern (32, 34) umfassen, auf denen jeweils die Flansche (8, 14) ruhen.

5. Mikromotor nach einem der vorangehenden Ansprüche, dadurch gekennzeichnet, daß der zweite Flansch (14) auf der zweiten Hülse (18) durch ein freies Ende der ersten Hülse (16) gehalten ist.

6. Mikromotor nach einem der vorangehenden Ansprüche, dadurch gekennzeichnet, daß das freie Ende der ersten Hülse (16) an dem zweiten Flansch (14) anliegt und die Breite des Luftspalts (E) begrenzt.

7. Mikromotor nach einem der vorangehenden Ansprüche, dadurch gekennzeichnet, daß der Zapfen (20) zwei Tragteile umfaßt, ein distales (40) und ein proximales (42), auf denen frei drehbeweglich die zweite Hülse (18) gelagert ist.

8. Mikromotor nach einem der vorangehenden Ansprüche, dadurch gekennzeichnet, daß der Zapfen (20) sich über die gesamte Länge der zweiten Hülse (18) erstreckt.

## Claims

1. Axial flux electromagnetic micromotor of the type comprising :
- a stator (2),
- a magnetized rotor (4) pivotally mounted in relation to the stator (2) about an axis of rotation (Xr), this rotor (4) having at least one pair of magnetic poles producing in an air gap (E) a magnetic field (H) parallel to said axis of rotation (Xr),
- a first and a second flanges (8, 14) of high magnetic permeability, perpendicular to said axis of rotation (Xr) and mechanically integral with the rotor (4), which define said air gap (E), and
- at least one planar coil (10), situated in said air gap (E), perpendicular to said axis of rotation (Xr) in such a way as to intercept the flux created by said field (E),
characterized in that the first and second flanges are rendered integral with the rotor (4) via the intermediary of, respectively, a first and a second sleeves (16, 18) which are coaxially disposed around one another, integral with one another and freely rotatably mounted on a fixed pin (20) rigidly connected to the stator (2).

2. Micromotor according to claim 1, characterized in that the sleeves (16, 18) are shrunk into one another.

3. Micromotor according to claim 1 or 2, characterized in that the two sleeves (16, 18) are driven onto one another.

4. Micromotor according to anyone of the preceding claims, characterized in that the sleeves (16, 18) comprise respectively shoulders (32, 34) on which the respective flanges (8, 14) rest.

5. Micromotor according to anyone of the preceding claims, characterized in that the second flange is maintained on the second sleeve (18) by a free extremity of the first sleeve (16).

6. Micromotor according to anyone of the preceding claims, characterized in that the free extremity of the first sleeve (16) rests against the second flange (14) and delimits the width of said air gap (E).

7. Micromotor according to anyone of the preceding claims, characterized in that said pin (20) has two bearing surfaces distal (40) and proximal (42) respectively on which the second sleeve (18) is freely rotatably mounted.

8. Micromotor according to anyone of the preceding claims, characterized in that the pin (20) extends over the entire length of the second sleeve (18).
